# EUROPÄISCHE PATENTSCHRIFT

(11) **EP 1 028 035 B1**
(45) Veröffentlichungstag und Bekanntmachung des Hinweises auf die Patenterteilung: **21.04.2004**
(21) Anmeldenummer: 00102177.3
(22) Anmeldetag: 09.02.2000
(51) Int. Cl.: B60R 21/20

(54) **Gassack für ein Kraftfahrzeug-Airbagmodul**
Airbag for a motor vehicle airbag module
Coussin gonflable pour un module à coussin gonflable de véhicule automobile

(30) Priorität: 09.02.1999 DE 29902274 U
(43) Veröffentlichungstag der Anmeldung: 16.08.2000
(73) Patentinhaber: TRW Automotive Safety Systems GmbH, 63743 Aschaffenburg (DE)
(72) Erfinder: Derrick, John-Oliver, 97265 Hettstadt (DE)
(74) Vertreter: Degwert, Hartmut, Dipl.-Phys.

(56) Entgegenhaltungen:
- EP-A- 0 773 142
- EP-A- 0 844 149
- EP-B- 0 565 209
- DE-A- 4 217 956
- US-A- 5 762 361
- PATENT ABSTRACTS OF JAPAN vol. 006, no. 216 (M-168), 29. Oktober 1982 (1982-10-29) & JP 57 121951 A (ASAHI KASEI KOGYO KK), 29. Juli 1982 (1982-07-29)

## Beschreibung

Die Erfindung betrifft einen Gassack für ein Kraftfahrzeug-Airbagmodul mit einer Öffnung zur Anordnung eines Gasgenerators sowie mit einem Montagering zur Befestigung des Öffnungsrandes an einem Trägerbauteil des Kraftfahrzeuges.

Ein solcher Gassack ist zum Beispiel aus der EP-B-0 565 209 bekannt.

Derartige Gassäcke bestehen üblicherweise aus Kunststoffgewebe und sind aus zwei oder mehr Gewebeabschnitten zusammengenäht oder zusammengeklebt. Bei der Herstellung der Gassäcke wird nach dem Stand der Technik ein Montagering aus Blech in den Gassack eingenäht, der die Gassacköffnung zur Anordnung eines Gasgenerators umgibt. Der Montagering wird beim Zusammenbau des Airbagmoduls mit einem Trägerbauteil verbunden, das seinerseits an der Kraftfahrzeugkarosserie befestigt wird oder Teil der Kraftfahrzeugkarosserie ist. Zur Befestigung des Montagerings wird üblicherweise eine begrenzte Anzahl von Befestigungspunkten vorgesehen, so daß der Montagering selbst verhältnismäßig stabil ausgeführt werden muß, damit am gesamten Umfang des Öffnungsrandes ausreichende Klemmkräfte erzeugt werden können.

Der äußere Rand des Montagerings ist meist nach oben abgebogen, um eine Beschädigung des Gassackgewebes beim explosionsartigen Aufblasen zu vermeiden. Dadurch darf jedoch die eigentlichen Klemmfläche nicht verringert werden, weil sonst ein Ausreißen des Gassacks beim explosionsartigen Aufblasen befürchtet werden muß. Damit der Montagering allen genannten Funktionen genügt, muß er relativ groß und stabil ausgeführt werden, was der stets angestrebten Gewichtseinsparung bei Kraftfahrzeugen zuwider läuft und außerdem mit einem vergleichsweisen großen Platzbedarf verbunden ist.

Der Erfindung liegt die Aufgabe zugrunde, für die Befestigung des Gassacks an einem Trägerbauteil des Kraftfahrzeuges eine Alternative zu dem herkömmlichen Montagering vorzuschlagen, durch die eine möglichst gleichmäßige Einspannung des Öffnungsrandes erreicht werden kann und die unabhängig von den sich aus der Befestigung des Airbagmoduls im Kraftfahrzeug ergebende Randbedingungen realisiert werden kann.

Zur Lösung dieser Aufgabe ist erfindungsgemäß vorgesehen, daß der einteilig mit einem Gehäusebauteil zur Aufnahme des Gasgenerators ausgebildete Montagering aus einem Kunststoffteil besteht, in das der Öffnungsrand des Gassacks gießtechnisch eingebunden ist.

Die erfindungsgemäße Ausgestaltung des Montagerings hat den Vorteil, daß man von der üblichen Klemmbefestigung mit unterschiedlicher Materialbeanspruchung abgehen kann und daß der Öffnungsrand über den gesamten Umfang gleichmäßig eingebunden und dementsprechend beim explosionsartigen Aufblasen des Gassacks überall gleichmäßig beansprucht wird. An die Stelle von örtlich hohen, auf die Befestigungspunkte beschränkten Beanspruchungen tritt demnach eine überall gleichmäßige Ausnutzung der Gewebefestigkeit, wodurch die Befestigung des Gassacks am Trägerbauteil einerseits mit geringerem Aufwand und andererseits mit größerer Betriebssicherheit realisiert werden kann.

Vorteilhafte Ausgestaltungen des Erfindungsgedankens sind in den Unteransprüchen 2 bis 4 beschrieben. Zweckmäßige Anwendungsmöglichkeiten des erfindungsgemäßen Gassacks zusammen mit vorteilhaften Ausgestaltungen anderer Airbag-Bauteile ergeben sich aus den Unteransprüchen 5 bis 7.

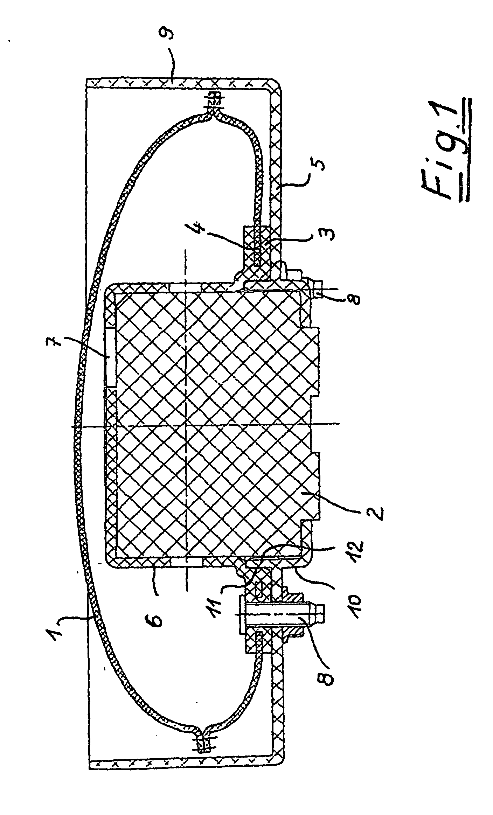

Weitere Einzelheiten werden anhand des in Figur 1 dargestellten Ausführungsbeispiels näher erläutert.

Figur 1 zeigt einen Schnitt durch eine Bauteilegruppe eines Airbagmoduls mit einem Gassack 1 gemäß der Erfindung. Der Öffnungsrand 4 des Gassacks 1 ist in einen aus Kunststoff bestehenden Montagering 3 gießtechnisch eingebunden und über Befestigungsbolzen 8 an einem Trägerbauteil 5 befestigt. Im dargestellten Ausführungsbeispiel ist das Trägerbauteil identisch mit einem Generatorträger 5, der einen größeren, topfförmigen Aufnahmebereich 9 für den zusammengefalteten Gassack 1 sowie einen kleineren topfförmigen Bereich 10 aufweist, dessen Wandbereich 12 zur Positionierung des Montagerings 3 dient.

Der Montagering kann - wie dargestellt - einstückig mit einem topfartigen Gehäusebauteil 6 für die Aufnahme eines Gasgenerators 2 ausgebildet sein, das wenigstens eine Austrittsöffnung 7 für die Gase zur Füllung des Gassacks aufweist. Zusammen mit dem kleineren topfförmigen Bereich 10 des Generatorträgers 5 wird so ein Gehäuse für die Aufnahme des Gasgenerators 2 geschaffen, dessen zueinander konzentrisch angeordnete, zylindrische Wandbereiche 11 und 12 zur gegenseitigen Positionierung dienen.

Die Befestigungsbolzen 8 sind zweckmäßiger Weise in den Montagering 3 aus Kunststoff gießtechnisch eingebunden. Auch der Generatorträger 5 kann aus Kunststoff hergestellt sein. Dadurch ergeben sich gegenüber einem üblicherweise aus Blech hergestellten Generatorträger weitere Gewichtseinsparungen.

Da es schwierig ist, den kompletten Gassack bei der Herstellung des Montagerings zu handhaben, ist vorgesehen, daß der Gassack aus einem kleinen, sich an den Öffnungsrand anschließenden ersten Gewebeteil besteht, an das die übrigen Gewebeteile nach der Herstellung des Montagerings 3 - mit ggf. einstückig angeformten Gehäusebauteil 6 - mit den übrigen Gewebeteilen des Gassacks verbunden wird.

## Patentansprüche

1. Gassack (1) für ein Kraftfahrzeug-Airbagmodul mit einer Öffnung zur Anordnung eines Gasgenerators (2) sowie mit einem Montagering (3) zur Befestigung des Öffnungsrandes (4) des Gassacks (1) an einem Trägerbauteil (5) des Kraftfahrzeuges, **dadurch gekennzeichnet, daß** der Montagering (3) einstückig mit einem topfartigen Gehäusebauteil (6) für die Aufnahme eines Gasgenerators (2) ausgebildet ist und aus einem Kunststoffteil besteht, in das der Öffnungsrand (4) gießtechnisch eingebunden ist.

2. Gassack nach Anspruch 1, **dadurch gekennzeichnet, daß** der Öffnungsrand (4) bei der gießtechnischen Herstellung des Kunststoffteils in den Montagering (3) eingebunden worden ist.

3. Gassack nach Anspruch 1 oder 2, **dadurch gekennzeichnet, daß** das Gehäusebauteil (6) wenigstens eine Austrittsöffnung (7) für die Gase zur Füllung des Gassacks (1) aufweist.

4. Gassack nach einem der Ansprüche 1 bis 3, **dadurch gekennzeichnet, daß** in den Montagering (3) Befestigungsbolzen (8) oder dergleichen gießtechnisch eingebunden sind.

5. Airbagmodul mit einem Gassack (1) nach einem der Ansprüche 1 bis 4, **dadurch gekennzeichnet, daß** als Trägerbauteil ein Generatorträger (5) vorgesehen ist, der einen größeren, topfförmigen Aufnahmebereich (9) für den zusammengefalteten Gassack (1) sowie einen kleineren topfförmigen Bereich (10) zur Komplettierung des Gehäusebauteils (6) für den Gasgenerator (2) umfaßt, wobei der Montagering (3) über Befestigungsmittel (8) mit dem Generatorträger (5) verbunden ist.

6. Airbagmodul nach Anspruch 5, **dadurch gekennzeichnet, daß** der Generatorträger (5) aus Kunststoff besteht.

7. Airbagmodul nach Anspruch 6, **dadurch gekennzeichnet, daß** der Montagering (3) und der kleinere topfförmige Bereich (10) des Generatorträgers (5) zueinander und zur Mittelachse der Öffnung konzentrisch angeordnete, zylindrische Wandbereiche (11, 12) zur gegenseitigen Positionierung aufweisen.

## Claims

1. A gas bag (1) for a motor vehicle airbag module with an opening for arranging a gas generator (2) and with a mounting ring (3) for fastening the opening rim (4) of the gas bag (1) to a carrier component (5) of the motor vehicle, **characterized in that** the mounting ring (3) is constructed in one piece with a cup-like housing component (6) for receiving a gas generator (2) and consists of a plastic part into which the opening rim (4) is embedded by casting.

2. The gas bag according to Claim 1, **characterized in that** in the production of the plastic part by casting, the opening rim (4) has been embedded into the mounting ring (3).

3. The gas bag according to Claim 1 or 2, **characterized in that** the housing component (6) has at least one outlet opening (7) for the gases for filling the gas bag (1).

4. The gas bag according to any of Claims 1 to 3, **characterized in that** fastening bolts (8) or the like are embedded by casting into the mounting ring (3).

5. An airbag module with a gas bag (1) according to any of Claims 1 to 4, **characterized in that** as a carrier component a generator carrier (5) is provided, which comprises a larger, cup-shaped receiving portion (9) for the folded gas bag (1) and a smaller cup-shaped region (10) for completing the housing component (6) for the gas generator (2), the mounting ring (3) being connected with the generator carrier (5) by fastening means (8).

6. The airbag module according to Claim 5, **characterized in that** the generator carrier (5) consists of plastics.

7. The airbag module according to Claim 6, **characterized in that** the mounting ring (3) and the smaller cup-shaped region (10) of the generator carrier (5) have cylindrical wall regions (11, 12) arranged concentrically to each other and to the central axis of the opening, for reciprocal positioning.

## Revendications

1. Coussin à gaz (1) pour un module d'airbag de véhicule automobile, comportant une ouverture pour l'agencement d'un générateur de gaz (2) ainsi qu'une bague de montage (3) pour fixer le bord d'ouverture (4) du coussin à gaz (1) sur un composant porteur (5) du véhicule, **caractérisé en ce que** la bague de montage (3) est réalisée d'un seul tenant avec un composant de boîtier (6) en forme de pot pour recevoir un générateur de gaz (2) et est constituée par une pièce de matière plastique dans laquelle le bord d'ouverture (4) est intégré par technique de moulage.

2. Coussin à gaz selon la revendication 1, **caractérisé en ce que** lors de la fabrication par moulage de la pièce de matière plastique, le bord d'ouverture (4) est intégré dans la bague de montage (3).

3. Coussin à gaz selon la revendication 1 ou 2, **caractérisé en ce que** le composant de boîtier (6) présente au moins un orifice de sortie (7) pour les gaz de remplissage du coussin à gaz (1).

4. Coussin à gaz selon l'une des revendications 1 à 3, **caractérisé en ce que** des boulons de serrage ou similaires sont intégrés dans la bague de montage (3) par technique de moulage.

5. Module d'airbag comportant un coussin à gaz (1) selon l'une des revendications 1 à 4, **caractérisé en ce qu'**il est prévu en tant que composant porteur un support de générateur (5) qui comprend une zone de réception (9) en forme de pot de grande taille pour le coussin à gaz (1) replié ainsi qu'une zone (10) en forme de pot de petite taille pour compléter le composant de boîtier (6) pour le générateur de gaz (2), la bague de montage (3) étant reliée au support de générateur (5) par des moyens de fixation (8).

6. Module d'airbag selon la revendication 5, **caractérisé en ce que** le support de générateur (5) est en matière plastique.

7. Module d'airbag selon la revendication 6, **caractérisé en ce que** la bague de montage (3) et la zone (10) en forme de pot de petite taille du support de générateur (5) présentent des zones de paroi (11, 12) cylindriques agencées concentriquement l'une par rapport à l'autre et par rapport à l'axe médian de l'ouverture, pour réaliser un positionnement réciproque.
